(19) Europäisches Patentamt
European Patent Office
Office européen des brevets

(11) Publication number: **0 319 339 B1**

(12) # EUROPEAN PATENT SPECIFICATION

(45) Date of publication of patent specification: **02.08.95**

(51) Int. Cl.$^6$: **C08L 71/12**, C08L 53/00, C08L 77/00, C08L 51/08

(21) Application number: **88311481.1**

(22) Date of filing: **02.12.88**

(54) **Resin composition and process for preparation thereof.**

(30) Priority: **04.12.87 JP 308034/87**

(43) Date of publication of application:
**07.06.89 Bulletin 89/23**

(45) Publication of the grant of the patent:
**02.08.95 Bulletin 95/31**

(84) Designated Contracting States:
**CH DE FR GB LI NL**

(56) References cited:
**EP-A- 0 226 910**
**EP-A- 0 237 710**
**EP-A- 0 244 090**
**EP-A- 0 276 768**
**EP-A- 0 309 907**

**Database WPIL, no. 87-126355 Derwent Publications Ltd, London, GB,& JP-A-62068850**

(73) Proprietor: **TORAY INDUSTRIES, INC.**
**2-1, Nihonbashi Muromachi 2-chome**
**Chuo-ku**
**Tokyo (JP)**

(72) Inventor: **Kobayashi, Kazuhiko**
**J-3-5, 1-81, Ikegamidai**
**Midori-ku**
**Nagoya-shi**
**Aichi (JP)**
Inventor: **Naganawa, Nobuo**
**G-3-1, 1-82, Ikegamidai**
**Midori-ku**
**Nagoya-shi**
**Aichi (JP)**
Inventor: **Chiba, Kazumasa**
**3-15, Fujie-cho**
**Nakamura-ku**
**Nagoya-shi**
**Aichi (JP)**

(74) Representative: **Coleiro, Raymond et al**
**MEWBURN ELLIS**
**York House**
**23 Kingsway**
**London WC2B 6HP (GB)**

EP 0 319 339 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a resin composition comprising a polyphenylene ether, a polyamide and two kinds of rubber components as the main components, and a process for the preparation of this resin composition.

Recently, attempts have been made to produce new materials by blending at least two kinds of polymers. Especially, there have been published many reports on polymer blend materials comprising a polyamide and a polyphenylene ether as the main components, because a polyamide has a good affinity for a polyphenylene ether and there is a possibility of providing materials having excellent processability, abrasion resistance and chemical resistance of the polyamide and excellent heat resistance, dimensional stability and water resistance of the polyphenylene ether in combination. For example, EP-A-0244090 discloses a blend of a polyamide, a polyphenylene ether, a rubbery polymer and an unsaturated compound containing a functional group. Of these blends, a blend comprising a polyamide, a specific modified polyphenylene ether and a rubber component as the third component is especially excellent in the balance among various characteristics. As typical examples of the blend of this type, there can be mentioned a composition comprising a polyamide, an acid-modified polyphenylene ether and a styrene/butadiene block copolymer (see, for example, Japanese Unexamined Patent Publication No 63-10656 and EP-A-0226910), a composition comprising a polyamide, an acid-modified polyphenylene ether and a hydrogenated styrene/butadiene/styrene block copolymer (see, for example, Japanese Unexamined Patent Publication No 62-138553), and a composition comprising a polyamide, an acid-modified polyphenylene ether and an acid-modified hydrogenated styrene/butadiene/styrene block copolymer (see, for example, Japanese Unexamined Patent Publication No 62-68850).

According to these conventional techniques, a certain kind of a rubber component is incorporated in a base blend of a polyamide and an acid-modified polyphenylene ether to manifest the aimed characteristics. Each of these conventional blends is considerably satisfactory in basic characteristics such as heat resistance, dimensional stability, moldability and impact resistance characteristic represented by Izod impact strength. However, at the falling ball test or falling weight test considered to give a substantially practical evaluation when used for exterior parts of automobiles, such as fenders, door panels and bumpers are presumed, the foregoing conventional materials are not completely satisfactory. More specifically, if these conventional materials are subjected to the falling ball test or falling weight test at low temperatures of 0 to -30 °C, brittle fracture occurs and breaking or cracking also occurs over a broad region including the point hit by the ball or weight. In short, they show a high brittleness at such low temperature. Uses for large parts such as exterior parts of automobiles are much restricted by this property, and improvement of the resistance to fracture at low temperatures is eagerly desired.

Each of EP-A-0276768 and EP-A-0309907 is acknowledged under Art 54(3) EPC. EP-A-0276768 is directed towards a continuous process for preparing moulding material and discloses a blend of a polyamide, a modified polyphenylene ether and one or more rubbery polymers, while EP-A-0309907 is directed towards a self-extinguishing moulding materials and again discloses a polyamide, a modified polyphenylene ether and one or more rubbery polymers. Each of EP-A-0276786 and EP-A-0309907 discloses respective examples in which the rubbery copolymer is a mixture of an A-B-A styrene-butadiene-styrene block copolymer with an ethylene/n-butyl acrylate/maleic anhydride copolymer.

A primary object of the present invention is to provide a polyphenylene ether/polyamide resin composition which has incorporated therein a strengthening agent and exhibits an improved resistance to fracture at low temperatures.

Another object of the present invention is to provide a polyphenylene ether/polyamide/rubber resin composition which retains excellent heat resistance, dimensional stability and melt flowability inherently possessed by a polyphenylene ether/polyamide resin composition, and exhibits an improved resistance to fracture at low temperatures.

Still another object of the present invention is to provide a process for preparing a polyphenylene ether/polyamide/rubber resin composition as mentioned above at a high efficiency.

In accordance with the present invention, there is provided a resin Composition comprising (A) 5 to 90% by weight of a modified polyphenylene ether obtained by reacting 100 parts by weight of a polyphenylene ether prepared by oxidative polymerisation of at least one phenol represented by the following formula (I).

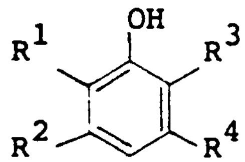

(I)

wherein each of $R^1$, $R^2$, $R^3$, and $R^4$, independently of one another, represents a hydrogen atom (ie. no substituent), an alkyl, alkoxy or haloalkyl group having 1 to 10 carbon atoms, an aryl group or a halogen atom,
with 0.05 to 20 parts by weight of a substituted olefin compound having in the molecule at least one functional group selected from a carboxylic acid group, a carboxylic anhydride group and an imide group in the presence of a radical generator, (B) 5 to 90% by weight of a polyamide, (C) 1 to 20% by weight of a block copolymer elastomer of the A-B-A' type (in which A and A' stand for a vinyl aromatic hydrocarbon block and B stands for a polymerized conjugated diene block or a hydrocarbon block formed by hydrogenating a part or all of said conjugated diene block), and (D) 1 to 20% by weight of a modified polyolefin having in the molecule at least one functional group selected from a carboxylic acid group, a carboxylic acid metal salt group, a carboxylic acid ester group, a carboxylic anhydride group and an imide group.

Furthermore, in accordance with the present invention, there is provided a process for the preparation of a resin composition, which comprises melt-kneading the above-mentioned components (A) to (D) at a temperature of from 220 °C to 350 °C.

Preferred embodiments will now be described.

The polyphenylene ether used as the starting material for the preparation of the modified polyphenylene ether as the component (A) in the present invention is prepared by oxidative polymerization of a phenol represented by the above-mentioned general formula (I). As the phenol, there can be mentioned, for example, 2,6-dimethylphenol, 2,6-diethylphenol, 2,6-dibutylphenol, 2,6-dipropylphenol, 2,6-diphenylphenol, 2-methyl-6-ethylphenol, 2-methyl-6-tolylphenol, 2-methyl-6-methoxyphenol, 2-methyl-6-butylphenol, 2,6-dimethoxyphenol, 2,3,6-trimethylphenol and 2,3,5,6-tetramethylphenol. Either a homopolymer obtained by polymerizing one phenol or a copolymer obtained by polymerizing a mixture of two or more of the foregoing phenols can be used in the present invention. A homopolymer obtained by polymerizing 2,6-dimethylphenol and a copolymer obtained by copolymerizing 2,6-dimethylphenol and 2,3,6-trimethylphenol are especially preferably used.

The modifying component used for the preparation of the modified polyphenylene ether in the present invention is a substituted olefin compound having at least one functional group selected from a carboxylic acid group, a carboxylic anhydride group and an imide group. As specific examples, there can be mentioned acrylic acid, methacrylic acid, maleic acid, fumaric acid, itaconic acid, maleic anhydride, itaconic anhydride, glutaconic anhydride, citraconic anhydride, aconitic anhydride, maleimide, N-phenylmaleimide, N-methylmaleimide and N-ethylmaleimide. The substituted olefin compound is used in an amount of 0.05 to 20 parts by weight, preferably 0.1 to 10 parts by weight, per 100 parts by weight of the polyphenylene ether. If the amount of the substituted olefin compound is smaller than 0.05 part by weight, the impact resistance and heat resistance of a composition obtained by kneading the modified polyphenylene ether, polyamide and rubber elastomer are not satisfactory. If the amount of the substituted olefin compound used exceeds 20 parts by weight, the flowability of the composition is reduced and the moldability is degraded.

The reaction of the polyphenylene ether with the substituted olefin compound is carried out in the presence of a radical generator. As preferred examples of the radical generator, there can be mentioned benzoyl peroxide, dicumyl peroxide, di-tert-butyl peroxide, t-butylcumyl peroxide, cumene hydroperoxide, 2,5-dimethyl-2,5-di-tert-butylperoxyhexane, 2,5-dimethyl-2,5-di-tert-butylperoxyhexyne-3 and azobisisobutyronitrile. The radical generator is preferably used in an amount of 5 to 30 parts by weight per 100 parts by weight of the substituted olefin compound. However, the kind and amount of the radical generator are not limited to those mentioned above.

As the process for reacting the polyphenylene ether with the substituted olefin compound, there can be mentioned a process in which the reaction is carried out in a solution by using an appropriate solvent, and a process in which a mixture of the polyphenylene ether, the substituted olefin compound and the radical generator is melt-kneaded at a high temperature of 200 to 350 °C in the absence of a solvent for 10 seconds to 30 minutes to effect the reaction. Any of these processes can be adopted.

The proportion of the thus-obtained modified polyphenylene ether in the final resin composition is 5 to 90% by weight, preferably 10 to 80% by weight. If the proportion of the modified polyphenylene ether is

smaller than 5% by weight, the heat resistance and dimensional stability become unsatisfactory and if the proportion of the modified polyphenylene ether exceeds 90% by weight, the moldability of the resin composition is degraded.

A polyamide comprising an amino acid, a lactam or a diamine and a dicarboxylic acid as the main components is used as the polyamide as the component (B) in the present invention. As the specific examples of the components, there can be mentioned lactams such as ε-caprolactam, enantholactam and ω-laurolactam, amino acid such as ε-aminocaproic acid, 11-aminoundecanoic acid and 12-aminododecanoic acid, diamines such as tetramethylene diamine, hexamethylene diamine, undecamethylene diamine, dodecamethylene diamine, 2,2,4-/2,4,4-trimethylhexamethylene diamine, 5-methylnonamethylene diamine, m-xylylene diamine, p-xylylene diamine, 1,3-bisaminomethylcyclohexane, 1,4-bisaminomethylcyclohexane, bis-p-aminocyclohexylmethane, bis-p-aminocyclohexylpropane and isophorone diamine, and dicarboxylic acids such as adipic acid, suberic acid, azelaic acid, sebacic acid, dodecanedioic acid, 1,4-cyclohexanedicarboxylic acid, 1,3-cyclohexanedicarboxylic acid, terephthalic acid, isophthalic acid, naphthalenedicarboxylic acid and dimer acid. These components can be used singly or in the form of mixtures of two or more thereof for the polymerization, and any of the thus-obtained homopolyamides and copolyamides can be used. Polyamides valuably used in the present invention are linear aliphatic polyamides such as polycapramide (nylon 6), polyhexamethylene adipamide (nylon 66), polyhexamethylene sebacamide (nylon 610), polyundecanamide (nylon 11), polydodecanamide (nylon 12), and copolymers and blends of these polyamides. The polymerization degree of the polyamide used in the present invention is not particularly limited, and polyamides having a relative viscosity of 1.5 to 5.0 (as measured on a polymer solution of 1% concentration in concentrated sulfuric acid at 25 °C) are optionally used.

The proportion of the polyamide in the composition of the present invention is 5 to 90% by weight, preferably 10 to 80% by weight. If the proportion of the polyamide is smaller than 5% by weight, the melt flowability and chemical resistance of the resin composition are poor. If the proportion of the polyamide exceeds 90% by weight, the water resistance and dimensional stability are poor.

The block copolymer elastomer used as the component (C) in the present invention is a block copolymer elastomer of the A-B-A′ type comprising a vinyl aromatic hydrocarbon and a polymerized conjugated diene, and the terminal blocks A and A′ may be the same or different and are a thermoplastic homopolymer or copolymer derived from a vinyl aromatic hydrocarbon, the aromatic portion of which may be either monocyclic or polycyclic. As examples of the vinyl aromatic hydrocarbon, there can be mentioned styrene, α-methylstyrene, vinyltoluene, vinylxylene, ethylvinylxylene, vinylnaphthalene, and mixtures thereof. The intermediate polymer block B consists of a polymerized conjugated diene type hydrocarbon. For example, there can be mentioned polymers derived from 1,3-butadiene, 2,3-dimethylbutadiene, isoprene, 1,3-pentadiene, and mixtures thereof.

The hydrogenated block copolymer elastomer of the A-B-A′ type used as the component (C') in the present invention is an elastomer obtained by hydrogenating a part or all of the intermediate polymer portion B of the above-mentioned block copolymer elastomer of the A-B-A' type according to, for example, the process disclosed in U.S. Patent No. 3,431,323.

The proportion of the block copolymer elastomer of the A-B-A' type or the hydrogenated block copolymer elastomer of the A-B-A' type as the component (C) or (C') in the resin composition of the present invention is 1 to 20% by weight, preferably 2 to 15% by weight. If the proportion of the block copolymer elastomer of the A-B-A' type or the hydrogenated block copolymer elastomer of the A-B-A' type is smaller than 1% by weight, the resistance to fracture at low temperatures and the impact resistance are degraded in the resin composition. If the proportion of the copolymer elastomer exceeds 20% by weight, the heat resistance and flowability of the resin composition are degraded.

The modified polyolefin used as the component (D) in the present invention is a modified polyolefin obtained by introducing a monomer component (hereinafter referred to as "functional group-containing component") having at least one functional group selected from the group consisting of a carboxylic acid group, a carboxylic acid ester group, a carboxylic acid metal salt group, a carboxylic anhydride group and an imide group into a polyolefin. Of these functional groups, a carboxylic anhydride group and an imide group are preferable. The polyolefin is obtained by radical polymerization of at least one olefin selected from ethylene, propylene, butene-1, pentene-1, 4-methylpentene-1, isobutylene, 1,4-hexadiene, dicyclopentadiene, 2,5-norbornadiene, 5-ethylidene-norbornene, 5-ethyl-2,5-norbornadiene, 5-(1'-propenyl)-2-norbornene and styrene.

As the functional group-containing component, there can be mentioned, for example, acrylic acid, methacrylic acid, maleic acid, fumaric acid, itaconic acid, crotonic acid, methylmaleic acid, methylfumaric acid, mesaconic acid, citraconic acid, glutaconic acid, metal salts of these carboxylic acids, methyl hydrogenmaleate, methyl hydrogenitaconate, methyl acrylate, ethyl acrylate, butyl acrylate, 2-ethylhexyl

acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-(2,2,1)-5-heptene-2,3-dicarboxylic acid, endobicyclo-(2,2,1)-5-heptene-2,3-dicarboxylic anhydride, maleimide, N-ethylmaleimide, N-butylmaleimide and N-phenylmaleimide.

The process for the introduction of the functional group-containing component is not particularly limited. There can be adopted, for example, a process in which the functional group-containing component is copolymerized with the olefin as the main component, and a process in which the functional group-containing component is introduced into the polyolefin by graft polymerization using a radical initiator. It is preferred that the functional group-containing component be introduced in an amount of 0.001 to 40 mole%, especially 0.01 to 35 mole%, based on the entire modified polyolefin.

As specific examples of the modified polyolefin especially valuably used in the present invention, an ethylene/acrylic acid copolymer, an ethylene/methacrylic acid copolymer, products obtained by converting a part or all of the carboxylic acid portion of these copolymers, to a salt with sodium, lithium, potassium, zinc or calcium, an ethylene/methyl acrylate copolymer, an ethylene/ethyl methacrylate copolymer, an ethylene/ethyl acrylate-g-maleic anhydride copolymer ("g" means "grafted": the same will apply hereinafter), an ethylene/methyl methacrylate-g-maleic anhydride copolymer, an ethylene/ethyl acrylate-g-maleimide copolymer, an ethylene/ethyl acrylate-g-N-phenylmaleimide copolymer, partially saponified products of these copolymers, an ethylene/propylene-g-maleic anhydride copolymer, an ethylene/butene-1-g-maleic anhydride copolymer, an ethylene/propylene/1,4-hexadiene-g-maleic anhydride copolymer, an ethylene/propylene/dicyclopentadiene-g-maleic anhydride copolymer, an ethylene/propylene/2,5-norbornadiene-g-maleic anhydride copolymer, an ethylene/propylene-g-N-phenylmaleimide copolymer, an ethylene/butene-1-g-N-phenylmaleimide copolymer, an ethylene/propylene-g-maleic anhydride-N-phenylmaleimide copolymer, and a styrene maleic anhydride copolymer. These modified polyolefins can be used singly or in the form of mixtures of two or more thereof.

The proportion of the modified polyolefin in the resin composition of the present invention is 1 to 20% by weight, preferably 2 to 15% by weight. If the proportion of the modified polyolefin is smaller than 1% by weight, the impact resistance of the composition comprising the modified polyphenylene ether, the polyamide and the modified polyolefin is poor. If the proportion of the modified polyolefin exceeds 20% by weight, the heat resistance and rigidity of the resin composition are degraded.

In the present invention, it is important that the component (C) or (C') and the component (D) must be used in combination. If each of the block copolymer elastomer of the A-B-A' type or hydrogenated block copolymer elastomer of the A-B-A' type and the modified polyolefin is singly used, the resulting resin composition has a poor resistance to fracture at a low temperature, i.e., brittle fracture inevitably occurs at such a low temperature as -30°c at the falling ball test or falling weight test. Only when both the components are used in combination, the resistance to fracture at low temperature is drastically improved, and a material having a much reduced brittle fracture rate can be obtained. The mechanism of attainment of this peculiar effect by this combined use of the rubber components has not been clearly clarified, but it is believed that the component (C) or (C') having a high affinity with the polyphenylene ether and the component (D) having a high affinity with the polyamide efficiently reinforce the polyphenylene ether phase and the polyamide phase, respectively.

The method for mixing the modified polyphenylene ether, the polyamide, the block copolymer elastomer of the A-B-A′ type or hydrogenated block copolymer elastomer of the A-B-A′ type and the modified polyolefin is not particularly limited. For example, a method can be adopted in which a mixture of powders, chips or pellets of the respective resins is fed to a known melting mixer such as a single-screw or twin-screw extruder, a Banbury mixer, a kneader or a mixing roll, and the mixture is kneaded at 220 to 350°C. The order of mixing of the four resins is not particularly limited. The four resins can be collectively mixed, or there can be adopted a method in which two or three resins are preliminarily mixed and the remaining resins are then mixed with the mixture.

Other additives such as a pigment, a dye, a reinforcer, a filler, a heat stabilizer, an antioxidant, a weathering agent, a lubricant, a release agent, a crystal nucleating agent, a plasticizer, a flame retardant, a flowability improver and an antistatic agent can be incorporated into the resin composition of the present invention at the mixing or molding step, as long as the physical properties of the resin composition are not degraded.

A molded product obtained by molding the resin composition of the present invention by injection molding, blow molding, extrusion molding or the like is excellent in not only heat resistance, water resistance, dimensional stability and impact resistance, but also resistance to fracture at low temperatures in particular. This molded product is very valuable for exterior parts of automobiles such as fenders, door panels, quarter panels, bumpers, spoilers, wheel caps, fuel lids and side shields, and other ordinary

machine parts.

The present invention will now be described in detail with reference to the following examples.

The properties described in the examples and comparative examples were determined according to the following methods.

(1) Melt Index:
JIS K-7210

(2) Tensile Characteristics:
ASTM D-638

(3) Flexural Characteristics:
ASTM D-790

(4) Izod Impact Strength:
ASTM D-256

(5) Heat Distortion Temperature:
ASTM D-648

(6) Resistance to Fracture at Low Temperatures:

A square plate sample having a size of 80 mm x 80 mm x 3 mm was cooled to -30 °C, and the falling weight test was carried out by dropping a 10-kg weight having a probe diameter of 12.7 mm on the sample from a height of 50 cm by using a Takashima-type falling weight tester. The test was conducted on 10 sample plates with respect to each resin composition, and the resistance to fracture at low temperatures was evaluated based on the number of sample plates where the low-temperature fracture occurred.

Referential Example 1 (Preparation of Polyphenylene Ether)

A polymerization reactor was charged with 1 ℓ of a solution of 7.6 g of anhydrous cuprous chloride and 10 g of di-tert-butylamine in toluene, and 4 ℓ of a toluene solution containing 55% by weight of 2,6-dimethylphenol was then added to the solution. While the mixture was maintained at 30 °C, oxidative polymerization was carried out with stirring by blowing oxygen into the mixture. After the polymerization, an aqueous solution of acetic acid was added to the reaction mixture to deactivate the catalyst and stop the reaction. The reaction liquid was concentrated and a large quantity of methanol was added to the concentrate to precipitate a polymer, The precipitated polymer was recovered by filtration, washed and dried to obtain a polyphenylene ether.

Referential Example 2 (Preparation of Modified Polyphenylene Ether)

A mixture comprising 100 parts by weight of the polyphenylene ether obtained in Referential Example 1, 1 part by weight of maleic anhydride and 0.1 part by weight of 2,5-dimethyl-2,5-di-tert-butylperoxyhexane was fed to hopper of an extruder and was melt-kneaded at a cylinder temperature of 320 °C to obtain a maleic anhydride-modified polyphenylene ether (A-1).

The reaction of the polyphenylene ether with maleic anhydride was confirmed by extracting the modified polyphenylene ether with methanol as the solvent at a bath ratio of 30:1 for 48 hours, measuring IR of the modified polyphenylene ether and analyzing the absorption peak at $\nu_{c=0}$ in the region of from 1600 to 1800 $cm^{-1}$.

Referential Example 3

The procedures of Referential Example 2 were repeated in the same manner except that the kind and amount of the olefin compound were changed as indicated below whereby modified polyphenylene ethers A-2 and A-3 were obtained.

| | Olefin Compound | Amount Added (parts by weight per 100 parts by weight of polyphenylene ether) |
|---|---|---|
| A-2 | N-phenylmaleimide | 3.0 |
| A-3 | itaconic anhydride | 0.5 |

Example 1

By using a Henschel mixer, 50 parts by weight of nylon 66 having a relative viscosity of 2.9, 40 parts by weight of the modified polyphenylene ether (A-1) obtained in Referential Example 1, 5 parts by weight of a polystyrene/polybutadiene/polystyrene block copolymer (Cariflex TR-1102 supplied by Shell Chemical Company) (C-1) and 5 parts by weight of an ethylene/propylene-g-maleic anhydride copolymer (D-1) having a melt index of 0.4 were dry-blended. The dry blend was fed to a hopper of a twin-screw extruder having a screw diameter of 30 mm and melt-kneaded at a cylinder temperature of 280 °C and a screw rotation number of 200 rpm. The kneaded mixture was pelletized, and the pellet was vacuum-dried at 100 °C for 24 hours and injection-molded at a cylinder temperature of 280 °C and a mold temperature of 80 °C to obtain a test piece for determination of physical properties. The characteristics of the test piece were as shown in Table 1. It was found that the obtained resin composition was a practically valuable material providing moldings having not only excellent strength, heat resistance and impact resistance but also very high resistance to fracture at low temperatures.

Comparative Example 1

Melt kneading, injection molding and evaluation of the characteristics were carried out in the same manner as described in Example 1 except that the modified polyolefin (D-1) was not used and the amount of the polystyrene/polybutadiene/polystyrene copolymer (C-1) was changed to 10 parts by weight. The results are shown in Table 1. At the low-temperature falling weight test, brittle fracture occurred in all the samples of the obtained resin composition, and it was found that the obtained composition has a poor resistance to fractures at low temperatures.

Comparative Example 2

Melt kneading, injection molding and evaluation of the characteristics were carried out in the same manner as described in Example 1 except that the polystyrene/polybutadiene/polystyrene copolymer (C-1) was not used and the amount of the modified polyolefin (D-1) incorporated was changed to 10 parts by weight. The obtained results are shown in Table 1. It was found that the resistance of the resin composition to fracture at low temperatures was not satisfactory.

Examples 2 to 8

Melt kneading and injection molding were carried out in the same manner as described in Example 1 except that the kinds and amounts of the polyamide, modified polyphenylene ether, block copolymer elastomer of the A-B-A' type, hydrogenated block copolymer elastomer of the A-B-A' type and modified polyolefin were changed as indicated in Table 1. The characteristics of the obtained molded pieces are shown in Table 1. It was found that each of the obtained resin compositions was a very valuable material providing moldings having an excellent strength, heat resistance, impact resistance and resistance to fracture at low temperatures.

Table 1

| Item | Unit | Example 1 | Comparative Example 1 | Comparative Example 2 | Example 2 | Example 3 | Example 4 | Example 5 | Example 6 | Example 7 | Example 8 |
|---|---|---|---|---|---|---|---|---|---|---|---|
| (A) | - | A-1 | A-1 | A-1 | A-2 | A-3 | A-1 | A-1 | A-1 | A-1 | A-1 |
| (B) | - | N-66 | N-66 | N-66 | N-66 | N-6 | N-6 | N-6 | N-6 | N-6 | N-66 |
| (C) | - | C-1 | C-1 | - | C-2 | C-2 | C-1 | C-2 | C-3 | - | - |
| (C)' | - | - | - | - | - | - | - | - | - | C'-1 | C'-1 |
| (D) | - | D-1 | - | D-1 | D-2 | D-2 | D-3 | D-3 | D-1 | D-1 | D-2 |
| (A)/(B)/(C) or (C)'/(D) | parts by weight | 40/50/5/5 | 40/50/10/0 | 40/50/0/10 | 30/55/10/5 | 40/45/10/5 | 60/30/5/5 | 40/50/7/3 | 45/45/5/5 | 40/45/10/5 | 45/45/5/5 |
| Tensile strength | $kg/cm^2$ | 570 | 580 | 550 | 500 | 510 | 590 | 540 | 570 | 570 | 590 |
| Flexural strength | $kg/cm^2$ | 760 | 790 | 740 | 710 | 720 | 800 | 760 | 770 | 790 | 830 |
| Flexural elastic modulus | $kg/cm^2$ | 20,300 | 20,500 | 19,700 | 18,000 | 18,200 | 21,200 | 20,700 | 20,500 | 21,000 | 21,700 |
| Izod impact strength | kg·cm/cm ·notch | 49 | 31 | 45 | 50 | 42 | 37 | 43 | 45 | 56 | 48 |
| Heat distortion temperature at 18.6 $kg/cm^2$ | °C | 147 | 149 | 145 | 132 | 136 | 156 | 141 | 142 | 141 | 146 |
| Resistance to fracture at low temperatures | - | 10 | 0 | 3 | 9 | 10 | 9 | 10 | 9 | 10 | 8 |

Note:

A-1: Maleic anhydride-modified poly-phenylene ether

A-2: N-phenyl maleimide-modified polyphenylene ether

A-3: Itaconic anhydride-modified polyphenylene ether

N-66: Nylon 66

N-6: Nylon 6

C-1: Polystyrene/polybutadiene/polystyrene block copolymer (Cariflex TR 1102 supplied by Shell Chemical Company)

C-2: Polystyrene/polybutadiene/polystyrene block copolymer (Cariflex TR 1101 supplied by Shell Chemical Company)

C-3: Polystyrene/polyisoprene/polystyrene block copolymer (Cariflex TR 1107 supplied by Shell Chemical Company)

C'-1: Hydrogenated polystyrene/polybutadiene/polystyrene block copolymer (Krayton G 1650 supplied by Shell Chemical Company)

D-1: Ethylene/propylene-g-maleic anhydride copolymer

D-2: ethylene/ethyl acrylate-g-maleic anhydride copolymer (melt index = 3.0)

D-3: ethylene/propylene-g-maleic anhydride-N-phenyl maleimide copolymer (melt index = 1.0)

## Claims

**Claims for the following Contracting States : GB, DE, FR, NL**

1. A resin composition comprising (A) 5 to 90% by weight of a modified polyphenylene ether obtained by reacting 100 parts by weight of a polyphenylene ether prepared by oxidative polymerization of at least one phenol represented by the following formula (I):

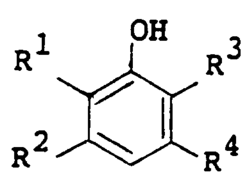

(I)

wherein each of $R^1$, $R^2$, $R^3$ and $R^4$, independently of one another, represents a hydrogen atom, an alkyl, alkoxy or haloalkyl group having 1 to 10 carbon atoms, an aryl group or a halogen atom,
with 0.05 to 20 parts by weight of a substituted olefin compound having in the molecule at least one functional group selected from a carboxylic acid group, a carboxylic anhydride group and an imide group in the presence of a radical generator, (B) 5 to 90% by weight of a polyamide, (C) 1 to 20% by weight of a block copolymer elastomer of the A-B-A' type (in which A and A' stand for a vinyl aromatic hydrocarbon block and B stands for a polymerized conjugated diene block or a hydrocarbon block formed by hydrogenating a part or all of said conjugated diene bock), and (D) 1 to 20% by weight of at least one modified polyolefin having in the molecule at least one functional group and selected from an ethylene/methacrylic acid copolymer, an ethylene/ethyl acrylate-g-maleic anhydride copolymer, an ethylene/ethyl acrylate-g-N-phenylmaleimide copolymer, an ethylene/propylene-g-maleic anhydride copolymer, an ethylene/butene-1-g-maleic anhydride copolymer, an ethylene/propylene-g-maleic anhydride-N-phenylmaleimide copolymer and an ethylene/butene-1-g-N-phenylmaleimide copolymer.

**2.** A resin composition according to claim 1, wherein the polyphenylene ether is a homopolymer of 2,6-dimethylphenol or a copolymer of 2,6-dimethylphenol with 2,3,6-trimethylphenol.

**3.** A resin composition according to claim 1 or claim 2, wherein the modified polyphenylene ether is obtained by reaction of a polyphenylene ether with an olefin compound containing a carboxylic anhydride group or an imide group.

**4.** A resin composition according to claim 3, wherein the olefin compound containing a carboxylic anhydride group is maleic anhydride, itaconic anhydride or glutaconic anhydride.

**5.** A resin composition according to claim 3, wherein the olefin compound containing an imide group is N-phenylmaleimide or N-methylmaleimide.

**6.** A resin composition according to any preceding claim, wherein the polyamide is a linear aliphatic polyamide.

**7.** A resin composition resin according to claim 6, wherein the polyamide is at least one member selected from nylon 6, nylon 66 and copolymers thereof.

**8.** A resin composition according to any preceding claim, wherein the copolymer elastomer of the A-B-A' type is a styrene/butadiene/styrene block copolymer or a styrene/isoprene/styrene block copolymer.

**9.** A resin composition according to any one of claims 1 to 7, wherein the hydrogenated block copolymer elastomer of the A-B-A' type is a hydrogenated styrene/butadiene/styrene block copolymer or a hydrogenated styrene/isoprene/styrene block copolymer.

**10.** A process for the preparation of a resin composition, which comprises melt-kneading at a temperature of 220 to 350 °C (A) 5 to 90% by weight of a modified polyphenylene ether obtained by reacting 100 parts by weight of a polyphenylene ether prepared by oxidative polymerization of at least one phenol represented by the following formula (I):

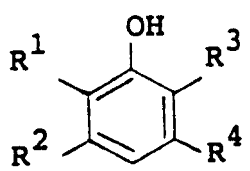

(I)

wherein each of $R^1$, $R^2$, $R^3$ and $R^4$, which may be the same as or different from one another, stands for a hydrogen atom, an alkyl, alkoxy or haloalkyl group having 1 to 10 carbon atoms, an aryl group or a halogen atom,
with 0.05 to 20 parts by weight of a substituted olefin compound having in the molecule at least one functional group selected from a carboxylic acid group, a carboxylic anhydride group and an imide group in the presence of a radical generator, (B) 5 to 90% by weight of a polyamide, (C) 1 to 20% by

weight of a block copolymer elastomer of the A-B-A' type (in which A and A' stand for a vinyl aromatic hydrocarbon block and B stands for a polymerized conjugated diene block or a hydrocarbon block formed by hydrogenating a part or all of said conjugated diene block), and (D) 1 to 20% by weight of at least one modified polyolefin having in the molecule at least one functional group and selected from an ethylene/methacrylic acid copolymer, an ethylene/ethyl acrylate-g-maleic anhydride copolymer, an ethylene/ethyl acrylate-g-N-phenylmaleimide copolymer, an ethylene/propylene-g-maleic anhydride copolymer, an ethylene/butene-1-g-maleic anhydride copolymer, an ethylene/propylene-g-maleic anhydride-N-phenylmaleimide copolymer and an ethylene/butene-1-g-N-phenylmaleimide copolymer.

**Claims for the following Contracting States : CH, LI**

1. A resin composition comprising (A) 5 to 90% by weight of a modified polyphenylene ether obtained by reacting 100 parts by weight of a polyphenylene ether prepared by oxidative polymerization of at least one phenol represented by the following formula (I):

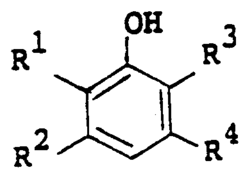

(I)

wherein each of $R^1$, $R^2$, $R^3$ and $R^4$, independently of one another, represents a hydrogen atom, an alkyl, alkoxy or haloalkyl group having 1 to 10 carbon atoms, an aryl group or a halogen atom, with 0.05 to 20 parts by weight of a substituted olefin compound having in the molecule at least one functional group selected from a carboxylic acid group, a carboxylic anhydride group and an imide group in the presence of a radical generator, (B) 5 to 90% by weight of a polyamide, (C) 1 to 20% by weight of a block copolymer elastomer of the A-B-A' type (in which A and A' stand for a vinyl aromatic hydrocarbon block and B stands for a polymerized conjugated diene block or a hydrocarbon block formed by hydrogenating a part or all of said conjugated diene bock), and (D) 1 to 20% by weight of a modified polyolefin having in the molecule at least one functional group selected from a carboxylic acid group, a carboxylic acid metal salt group, a carboxylic acid ester group, a carboxylic anhydride group and an imide group.

2. A resin composition according to claim 1, wherein the polyphenylene ether is a homopolymer of 2,6-dimethylphenol or a copolymer of 2,6-dimethylphenol with 2,3,6-trimethylphenol.

3. A resin composition according to claim 1 or claim 2, wherein the modified polyphenylene ether is obtained by reaction of a polyphenylene ether with an olefin compound containing a carboxylic anhydride group or an imide group.

4. A resin composition according to claim 3, wherein the olefin compound containing a carboxylic anhydride group is maleic anhydride, itaconic anhydride or glutaconic anhydride.

5. A resin composition according to claim 3, wherein the olefin compound containing an imide group is N-phenylmaleimide or N-methylmaleimide.

6. A resin composition according to any preceding claim, wherein the polyamide is a linear aliphatic polyamide.

7. A resin composition resin according to claim 6, wherein the polyamide is at least one member selected from nylon 6, nylon 66 and copolymers thereof.

8. A resin composition according to any preceding claim, wherein the copolymer elastomer of the A-B-A' type is a styrene/butadiene/styrene block copolymer or a styrene/isoprene/styrene block copolymer.

9. A resin composition according to any one of claims 1 to 7, wherein the hydrogenated block copolymer elastomer of the A-B-A' type is a hydrogenated styrene/butadiene/styrene block copolymer or a

hydrogenated styrene/isoprene/styrene block copolymer.

**10.** A resin composition according to any preceding claim, wherein the modified polyolefin is a member selected from an ethylene/methacrylic acid copolymer, a partial metal salt thereof, an ethylene/ethyl acrylate-g-maleic anhydride copolymer, an ethylene/ethyl acrylate-g-N-phenylmaleimide copolymer, an ethylene/propylene-g-maleic anhydride copolymer, an ethylene/butene-1-g-maleic anhydride copolymer, an ethylene/propylene-g-maleic anhydride-N-phenylmaleimide copolymer and an ethylene/butene-1-g-N-phenylmaleimide copolymer.

**11.** A process for the preparation of a resin composition, which comprises melt-kneading at a temperature of 220 to 350 °C (A) 5 to 90% by weight of a modified polyphenylene ether obtained by reacting 100 parts by weight of a polyphenylene ether prepared by oxidative polymerization of at least one phenol represented by the following formula (I):

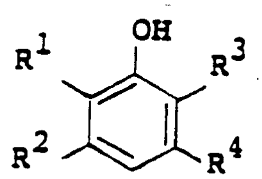

(I)

wherein each of $R^1$, $R^2$, $R^3$ and $R^4$, which may be the same as or different from one another, stands for a hydrogen atom, an alkyl, alkoxy or haloalkyl group having 1 to 10 carbon atoms, an aryl group or a halogen atom,
with 0.05 to 20 parts by weight of a substituted olefin compound having in the molecule at least one functional group selected from a carboxylic acid group, a carboxylic anhydride group and an imide group in the presence of a radical generator, (B) 5 to 90% by weight of a polyamide, (C) 1 to 20% by weight of a block copolymer elastomer of the A-B-A' type (in which A and A' stand for a vinyl aromatic hydrocarbon block and B stands for a polymerized conjugated diene bock or a hydrocarbon block formed by hydrogenating a part or all of said conjugated diene block), and (D) 1 to 20% by weight of a modified polyolefin having in the molecule at least one functional group selected from a carboxylic acid group, a carboxylic acid metal salt group, a carboxylic acid ester group, a carboxylic anhydride group and an imide group.

## Patentansprüche

## Patentansprüche für folgende Vertragsstaaten : GB, DE, FR, NL

**1.** Harzzusammensetzung, welche umfaßt: (A) 5 bis 90 Gew.-% eines modifizierten Polyphenylenethers, der durch Reaktion von 100 Gewichtsteilen eines Polyphenylenethers, der durch oxidierende Polymerisation von mindestens einem Phenol hergestellt wird, das durch folgende Formel (I) dargestellt wird:

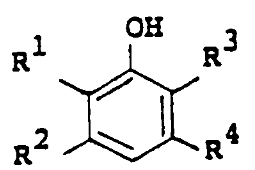

(I)

worin jedes $R^1$, $R^2$, $R^3$ und $R^4$ unabhängig voneinander ein Wasserstoffatom, eine Alkyl-, Alkoxy- oder Halogenalkylgruppe mit 1 bis 10 Kohlenstoffatomen, eine Arylgruppe oder ein Halogenatom darstellt,
mit 0,05 bis 20 Gewichtsteilen einer substituierten Olefinverbindung, die im Molekül mindestens eine funktionelle Gruppe aufweist, die aus einer Carbonsäuregruppe, einer Carbonsäureanhydridgruppe und einer Imidgruppe ausgewählt ist, in Gegenwart eines Radikalbildners erhalten wird, (B) 5 bis 90 Gew.-% Polyamid, (C) 1 bis 20 Gew.-% eines Blockcopolymer-Elastomers vom A-B-A'-Typ (worin A und A' einen vinylaromatischen Kohlenwasserstoffblock darstellen und B einen polymerisierten, konjugierten

Dienblock oder einen Kohlenwasserstoffblock darstellt, der durch Hydrieren eines Teils oder des gesamten konjugierten Dienblocks gebildet wurde) und (D) 1-20 Gew.-% von mindestens einem modifizierten Polyolefin, das im Molekül mindestens eine funktionelle Gruppe aufweist, und das ausgewählt ist aus einem Ethylen/Methacrylsäure-Copolymer, einem Ethylen/Ethylacrylat-g-Maleinsäureanhydrid-Copolymer, einem Ethylen/Ethylacrylat-g-N-Phenylmaleimid-Copolymer, einem Ethylen/propylen-g-Maleinsäureanhydrid-Copolymer, einem Ethylen/Buten-1-g-Maleinsäureanhydrid-Copolymer, einem Ethylen/propylen-g-Maleinsäureanhydrid-N-Phenylmaleimid-Copolymer und einem Ethylen/Buten-1-g-N-Phenylmaleimid-Copolymer.

**2.** Harzzusammensetzung nach Anspruch 1, wobei der Polyphenylenether ein Homopolymer von 2,6-Dimethylphenol oder ein Copolymer von 2,6-Dimethylphenol mit 2,3,6-Trimethylphenol ist.

**3.** Harzzusammensetzung nach Anspruch 1 oder Anspruch 2, wobei der modifizierte Polyphenylenether durch Reaktion von Polyphenylenether mit einer Olefinverbindung erhalten wird, die eine carbonsäureanhydridgruppe oder eine Imidgruppe enthält.

**4.** Harzzusammensetzung nach Anspruch 3, wobei die Olefinverbindung, die eine Carbonsäureanhydridgruppe enthält, Maleinsäureanhydrid, Itaconsäureanhydrid oder Glutaconsäureanhydrid ist.

**5.** Harzzusammensetzung nach Anspruch 3, wobei die Olefinverbindung, die eine Imidgruppe enthält, N-Phenylmaleimid oder N-Methylmaleimid ist.

**6.** Harzzusammensetzung nach einem der vorstehenden Ansprüche, wobei das Polyamid ein lineares aliphatisches Polyamid ist.

**7.** Harzzusammensetzung nach Anspruch 6, wobei das Polyamid mindestens eine Verbindung ist, die aus Nylon 6, Nylon 66 und Copolymeren davon ausgewählt ist.

**8.** Harzzusammensetzung nach einem der vorstehenden Ansprüche, wobei das Copolmer-Elastomer vom Typ A-B-A' ein Styrol/Butadien/Styrol-Blockcopolymer oder ein Styrol/Isopren/Styrol-Blockcopolymer ist.

**9.** Harzzusammensetzung nach einem der Ansprüche 1 bis 7, wobei das hydrierte Blockcopolmer-Elastomer vom Typ A-B-A' ein hydriertes Styrol/Butadien/Styrol-Blockcopolymer oder ein hydriertes Styrol/Isopren/Styrol-Blockcopolymer ist.

**10.** Verfahren zur Herstellung einer Harzzusammensetzung, umfassend das Schmelzkneten bei einer Temperatur von 220 bis 350 °C von (A) 5 bis 90 Gew.-% eines modifizierten Polyphenylenethers, der durch Reaktion von 100 Gewichtsteilen eines Polyphenylenethers, der durch oxidierende Polymerisation von mindestens einem Phenol hergestellt wird, das durch folgende Formel (I) dargestellt wird:

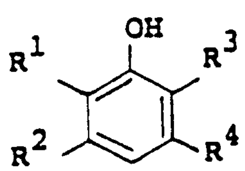

(I)

worin jedes $R^1$, $R^2$, $R^3$ und $R^4$ unabhängig voneinander ein Wasserstoffatom, eine Alkyl-, Alkoxy- oder Halogenalkylgruppe mit 1 bis 10 Kohlenstoffatomen, eine Arylgruppe oder ein Halogenatom darstellt,
mit 0,05 bis 20 Gewichtsteilen einer substituierten olefinverbindung, die im Molekül mindestens eine funktionelle Gruppe aufweist, die aus einer Carbonsäuregruppe, einer Carbonsäureanhydridgruppe und einer Imidgruppe ausgewählt ist, in Gegenwart eines Radikalbildners erhalten wird, (B) 5 bis 90 Gew.-% Polyamid, (C) 1 bis 20 Gew.-% eines Blockcopolymer-Elastomers vom A-B-A'-Typ (worin A und A' einen vinylaromatischen Kohlenwasserstoffblock darstellen und B einen polymerisierten, konjugierten Dienblock oder einen Kohlenwasserstoffblock darstellt, der durch Hydrieren eines Teils oder des

gesamten konjugierten Dienblocks gebildet wurde) und (D) 1-20 Gew.-% von mindestens einem modifizierten Polyolefin, das im Molekül mindestens eine funktionelle Gruppe aufweist, und das ausgewählt ist aus einem Ethylen/Methacrylsäure-Copolymer, einem Ethylen/Ethylacrylat-g-Maleinsäureanhydrid-Copolymer, einem Ethylen/Ethylacrylat-g-N-Phenylmaleimid-Copolymer, einem Ethylen/Propylen-g-Maleinsäureanhydrid-Copolymer, einem Ethylen/Buten-1-g-Maleinsäureanhyrid-Copolymer, einem Ethylen/propylen-g-Maleinsäureanhydrid-N-Phenylmaleimid-Copolymer und einem Ethylen/Buten-1-g-N-Phenylmaleimid-Copolymer.

**Patentansprüche für folgende Vertragsstaaten : CH, LI**

1. Harzzusammensetzung, welche umfaßt: (A) 5 bis 90 Gew.-% eines modifizierten Polyphenylenethers, der durch Reaktion von 100 Gewichtsteilen eines Polyphenylenethers, der durch oxidierende Polymerisation von mindestens einem Phenol hergestellt wird, das durch folgende Formel (I) dargestellt wird:

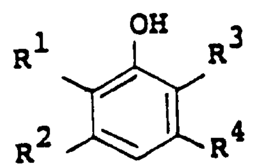

(I)

worin jedes $R^1$, $R^2$, $R^3$ und $R^4$ unabhängig voneinander ein Wasserstoffatom, eine Alkyl-, Alkoxy- oder Halogenalkylgruppe mit 1 bis 10 Kohlenstoffatomen, eine Arylgruppe oder ein Halogenatom darstellt,
mit 0,05 bis 20 Gewichtsteilen einer substituierten Olefinverbindung, die im Molekül mindestens eine funktionelle Gruppe aufweist, die aus einer Carbonsäuregruppe, einer Carbonsäureanhydridgruppe und einer Imidgruppe ausgewählt ist, in Gegenwart eines Radikalbildners erhalten wird, (B) 5 bis 90 Gew.-% Polyamid, (C) 1 bis 20 Gew.-% eines Blockcopolymer-Elastomers vom A-B-A'-Typ (worin A und A' einen vinylaromatischen Kohlenwasserstoffblock darstellen und B einen polymerisierten, konjugierten Dienblock oder einen Kohlenwasserstoffblock darstellt, der durch Hydrieren eines Teils oder des gesamten konjugierten Dienblocks gebildet wurde) und (D) 1 bis 20 Gew.-% eines modifizierten Polyolefins, das im Molekül mindestens eine funktionelle Gruppe aufweist, die ausgewählt ist aus einer Carbonsäuregruppe, einer Carbonsäuremetallsalzgruppe, einer Carbonsäureestergruppe, einer Carbonsäureanhydridgruppe und einer Imidgruppe.

2. Harzzusammensetzung nach Anspruch 1, wobei der Polyphenylenether ein Homopolymer von 2,6-Dimethylphenol oder ein Copolymer von 2,6-Dimethylphenol mit 2,3,6-Trimethylphenol ist.

3. Harzzusammensetzung nach Anspruch 1 oder Anspruch 2, wobei der modifizierte Polyphenylenether durch Reaktion von Polyphenylenether mit einer Olefinverbindung erhalten wird, die eine Carbonsäureanhydridgruppe oder eine Imidgruppe enthält.

4. Harzzusammensetzung nach Anspruch 3, wobei die Olefinverbindung, die eine Carbonsäureanhydridgruppe enthält, Maleinsäureanhydrid, Itaconsäureanhydrid oder Glutaconsäureanhydrid ist.

5. Harzzusammensetzung nach Anspruch 3, wobei die Olefinverbindung, die eine Imidgruppe enthält, N-Phenylmaleimid oder N-Methylmaleimid ist.

6. Harzzusammensetzung nach einem der vorstehenden Ansprüche, wobei das Polyamid ein lineares aliphatisches Polyamid ist.

7. Harzzusammensetzung nach Anspruch 6, wobei das Polyamid mindestens eine Verbindung ist, die aus Nylon 6, Nylon 66 und Copolymeren davon ausgewählt ist.

8. Harzzusammensetzung nach einem der vorstehenden Ansprüche, wobei das Copolymer-Elastomer vom Typ A-B-A' ein Styrol/Butadien/Styrol-Blockcopolymer oder ein Styrol/Isopren/Styrol-Blockcopolymer ist.

9. Harzzusammensetzung nach einem der Ansprüche 1 bis 7, wobei das hydrierte Blockcopolymer-Elastomer vom Typ A-B-A' ein hydriertes Styrol/Butadien/Styrol-Blockcopolymer oder ein hydriertes Styrol/Isopren/Styrol-Blockcopolymer ist.

10. Harzzusammensetzung nach einem der vorstehenden Ansprüche, wobei das modifizierte Polyolefin eine Verbindung ist, die ausgewählt ist aus einem Ethylen/Methacrylsäure-Copolymer, einem teilweisen Metallsalz davon, einem Ethylen/Ethylacrylat-g-Maleinsäureanhydrid-Copolymer, einem Ethylen/Ethylacrylat-g-N-Phenylmaleimid-Copolymer, einem Ethylen/Propylen-g-Maleinsäureanhydrid-Copolymer, einem Ethylen/Buten-1-g-Maleinsäureanhydrid-Copolymer, einem Ethylen/Propylen-g-Maleinsäureanhydrid-N-phenylmaleimid-Copolymer und einem Ethylen/Buten-1-g-N-Phenylmaleimid-Copolymer.

11. Verfahren zur Herstellung einer Harzzusammensetzung, umfassend das Schmelzkneten bei einer Temperatur von 220 bis 350 °C von (A) 5 bis 90 Gew.-% eines modifizierten Polyphenylenethers, der durch Reaktion von 100 Gewichtsteilen eines Polyphenylenethers, der durch oxidierende Polymerisation von mindestens einem Phenol hergestellt wird, das durch folgende Formel (I) dargestellt wird:

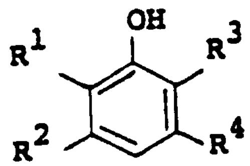

(I)

worin jedes $R^1$ $R^2$, $R^3$ und $R^4$, die gleich oder voneinander verschieden sein können, ein Wasserstoffatom, eine Alkyl-, Alkoxy- oder Halogenalkylgruppe mit 1 bis 10 Kohlenstoffatomen, eine Arylgruppe oder ein Halogenatom darstellt,
mit 0,05 bis 20 Gewichtsteilen einer substituierten Olefinverbindung, die im Molekül mindestens eine funktionelle Gruppe aufweist, die aus einer Carbonsäuregruppe, einer Carbonsäureanhydridgruppe und einer Imidgruppe ausgewählt ist, in Gegenwart eines Radikalbildners erhalten wird, (B) 5 bis 90 Gew.-% Polyamid, (C) 1 bis 20 Gew.-% eines Blockcopolymer-Elastomers vom A-B-A'-Typ (worin A und A' einen vinylaromatischen Kohlenwasserstoffblock darstellen und B einen polymerisierten, konjugierten Dienblock oder einen Kohlenwasserstoffblock darstellt, der durch Hydrieren eines Teils oder des gesamten konjugierten Dienblocks gebildet wurde) und (D) 1 bis 20 Gew.-% eines modifizierten Polyolefins, das im Molekül mindestens eine funktionelle Gruppe aufweist, die ausgewählt ist aus einer Carbonsäuregruppe, einer Carbonsäuremetallsalzgruppe, einer Carbonsäureestergruppe, einer Carbonsäureanhydridgruppe und einer Imidgruppe.

**Revendications**
**Revendications pour les Etats contractants suivants : GB, DE, FR, NL**

1. Une composition de résine comprenant (A) 5 à 90 % en poids d'un polyoxyde de phénylène modifié obtenu en faisant réagir 100 parties en poids d'un polyoxyde de phénylène préparé par polymérisation par couplage oxydant d'au moins un phénol représenté par la formule (I) suivante :

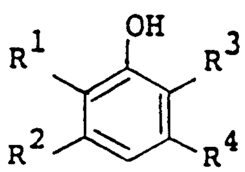

(I)

dans laquelle chacun de $R^1$, $R^2$, $R^3$ et $R^4$, indépendamment des autres, représente un atome d'hydrogène, un groupe alkyle, alcoxy ou halogènoalkyle ayant 1 à 10 atomes de carbone, un groupe aryle ou un atome d'halogène,
avec 0,05 à 20 parties en poids d'un composé oléfinique substitué dont la molécule contient au moins un groupe fonctionnel choisi parmi un groupe acide carboxylique, un groupe anhydride carboxylique et

un groupe imide, en présence d'un générateur de radicaux, (B) 5 à 90 % en poids d'un polyamide, (C) 1 à 20 % en poids d'un élastomère copolymère séquencé du type A-B-A' (où A et A' représentent chacun une séquence d'hydrocarbure vinylique aromatique et B représente une séquence de diène conjugué polymérisé ou une séquence d'hydrocarbure formée en hydrogénant une partie ou la totalité de ladite séquence de diène conjugué), et (D) 1 à 20 % en poids d'au moins une polyoléfine modifiée dont la molécule contient au moins un groupe fonctionnel et choisie parmi un copolymère éthylène/acide méthacrylique, un copolymère éthylène/acrylate d'éthyle-g-anhydride maléique, un copolymère éthylène/acrylate d'éthyle-g-N-phénylmaléimide, un copolymère éthylène/propylène-g-anhydride maléique, un copolymère éthylène/butène-1-g-anhydride maléique, un copolymère éthylène/propylène-g-anhydride maléique-N-phénylmaléimide et un copolymère éthylène/butène-1-g-N-phénylmaléimide.

**2.** Une composition de résine selon la revendication 1, dans laquelle le polyoxyde de phénylène est un homopolymère de 2,6-diméthylphénol ou un copolymère de 2,6-diméthylphénol avec le 2,3,6-triméthylphénol.

**3.** Une composition de résine selon la revendication 1 ou la revendication 2, dans laquelle le polyoxyde de phénylène modifié est obtenu par réaction d'un polyoxyde de phénylène avec un composé oléfinique contenant un groupe anhydride carboxylique ou un groupe imide.

**4.** Une composition de résine selon la revendication 3, dans laquelle le composé oléfinique contenant un groupe anhydride carboxylique est l'anhydride maléique, l'anhydride itaconique ou l'anhydride glutaconique.

**5.** Une composition de résine selon la revendication 3, dans laquelle le composé oléfinique contenant un groupe imide est le N-phénylmaléimide ou le N-méthylmaléimide.

**6.** Une composition de résine selon l'une quelconque des revendications précédentes, dans laquelle le polyamide est un polyamide aliphatique linéaire.

**7.** Une composition de résine selon la revendication 6, dans laquelle le polyamide est au moins une espèce choisie parmi le Nylon 6, le Nylon 6-6 et leurs copolymères.

**8.** Une composition de résine selon l'une quelconque des revendications précédentes, dans laquelle l'élastomère copolymère du type A-B-A' est un copolymère séquencé styrène/butadiène/styrène ou un copolymère séquencé styrène/isoprène/styrène.

**9.** Une composition de résine selon l'une quelconque des revendications 1 à 7, dans laquelle l'élastomère copolymère séquencé hydrogéné du type A-B-A' est un copolymère séquencé styrène/butadiène/styrène hydrogéné ou un copolymère séquencé styrène/isoprène/styrène hydrogéné.

**10.** Un procédé pour la préparation d'une composition de résine, qui comprend un malaxage à l'état fondu, à une température de 220 à 350 °C, de (A) 5 à 90 % en poids d'un polyoxyde de phénylène modifié obtenu en faisant réagir 100 parties en poids d'un polyoxyde de phénylène préparé par polymérisation par couplage oxydant d'au moins un phénol représenté par la formule (I) suivante :

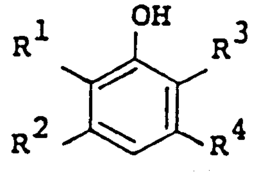

(I)

dans laquelle chacun de $R^1$, $R^2$, $R^3$ et $R^4$, qui peuvent être identiques ou différents entre eux, représente un atome d'hydrogène, un groupe alkyle, alcoxy ou halogénoalkyle ayant 1 à 10 atomes de carbone, un groupe aryle ou un atome d'halogène,
avec 0,05 à 20 parties en poids d'un composé oléfinique substitué dont la molécule contient au moins un groupe fonctionnel choisi parmi un groupe acide carboxylique, un groupe anhydride carboxylique et

un groupe imide, en présence d'un générateur de radicaux, (B) 5 à 90 % en poids d'un polyamide, (C) 1 à 20 % en poids d'un élastomère copolymère séquencé du type A-B-A' (où A et A' représentent chacun une séquence d'hydrocarbure vinylique aromatique et B représente une séquence de diène conjugué polymérisé ou une séquence d'hydrocarbure formée en hydrogénant une partie ou la totalité de ladite séquence de diène conjugué), et (D) 1 à 20 % en poids d'au moins une polyoléfine modifiée dont la molécule contient au moins un groupe fonctionnel et choisie parmi un copolymère éthylène/acide méthacrylique, un copolymère éthylène/acrylate d'éthyle-g-anhydride maléique, un copolymère éthylène/acrylate d'éthyle-g-N-phénylmaléimide, un copolymère éthylène/propylène-g-anhydride maléique, un copolymère éthylène/butène-1-g-anhydride maléique, un copolymère éthylène/propylène-g-anhydride maléique-N-phénylmaléimide et un copolymère éthylène/butène-1-g-N-phénylmaléimide.

**Revendications pour les Etats contractants suivants : CH, LI**

**1.** Une composition de résine comprenant (A) 5 à 90 % en poids d'un polyoxyde de phénylène modifié obtenu en faisant réagir 100 parties en poids d'un polyoxyde de phénylène préparé par polymérisation par couplage oxydant d'au moins un phénol représenté par la formule (I) suivante :

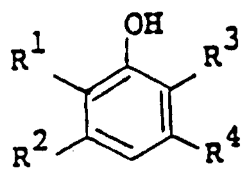

(I)

dans laquelle chacun de $R^1$, $R^2$, $R^3$ et $R^4$, indépendamment des autres, représente un atome d'hydrogène, un groupe alkyle, alcoxy ou halogènoalkyle ayant 1 à 10 atomes de carbone, un groupe aryle ou un atome d'halogène,
avec 0,05 à 20 parties en poids d'un composé oléfinique substitué dont la molécule contient au moins un groupe fonctionnel choisi parmi un groupe acide carboxylique, un groupe anhydride carboxylique et un groupe imide, en présence d'un générateur de radicaux, (B) 5 à 90 % en poids d'un polyamide, (C) 1 à 20 % en poids d'un élastomère copolymère séquencé du type A-B-A' (où A et A' représentent chacun une séquence d'hydrocarbure vinylique aromatique et B représente une séquence de diène conjugué polymérisé ou une séquence d'hydrocarbure formée en hydrogénant une partie ou la totalité de ladite séquence de diène conjugué), et (D) 1 à 20 % en poids d'une polyoléfine modifiée dont la molécule contient au moins un groupe fonctionnel choisi parmi un groupe acide carboxylique, un groupe sel métallique d'acide carboxylique, un groupe ester d'acide carboxylique, un groupe anhydride carboxylique et un groupe imide.

**2.** Une composition de résine selon la revendication 1, dans laquelle le polyoxyde de phénylène est un homopolymère de 2,6-diméthylphénol ou un copolymère de 2,6-diméthylphénol avec le 2,3,6-triméthylphénol.

**3.** Une composition de résine selon la revendication 1 ou la revendication 2, dans laquelle le polyoxyde de phénylène modifié est obtenu par réaction d'un polyoxyde de phénylène avec un composé oléfinique contenant un groupe anhydride carboxylique ou un groupe imide.

**4.** Une composition de résine selon la revendication 3, dans laquelle le composé oléfinique contenant un groupe anhydride carboxylique est l'anhydride maléique, l'anhydride itaconique ou l'anhydride glutaconique.

**5.** Une composition de résine selon la revendication 3, dans laquelle le composé oléfinique contenant un groupe imide est le N-phénylmaléimide ou le N-méthylmaléimide.

**6.** Une composition de résine selon l'une quelconque des revendications précédentes, dans laquelle le polyamide est un polyamide aliphatique linéaire.

**7.** Une composition de résine selon la revendication 6, dans laquelle le polyamide est au moins une espèce choisie parmi le Nylon 6, le Nylon 6-6 et leurs copolymères.

**8.** Une composition de résine selon l'une quelconque des revendications précédentes, dans laquelle l'élastomère copolymère du type A-B-A' est un copolymère séquencé styrène/butadiène/styrène ou un copolymère séquencé styrène/isoprène/styrène.

**9.** Une composition de résine selon l'une quelconque des revendications 1 à 7, dans laquelle l'élastomère copolymère séquencé hydrogéné du type A-B-A' est un copolymère séquencé styrène/butadiène/styrène hydrogéné ou un copolymère séquencé styrène/isoprène/styrène hydrogéné.

**10.** Une composition de résine selon l'une quelconque des revendications précédentes, dans laquelle la polyoléfine modifiée est une espèce choisie parmi un copolymère éthylène/acide méthacrylique, un sel métallique partiel de celui-ci, un copolymère éthylène/acrylate d'éthyle-g-anhydride maléique, un copolymère éthylène/acrylate d'éthyle-g-N-phénylmaléimide, un copolymère éthylène/propylène-g-anhydride maléique, un copolymère éthylène/butène-1-g-anhydride maléique, un copolymère éthylène/propylène-g-anhydride maléique-N-phénylmaléimide et un copolymère éthylène/butène-1-g-N-phénylmaléimide.

**11.** Un procédé pour la préparation d'une composition de résine, qui comprend un malaxage à l'état fondu, a une température de 220 à 350 °C, de (A) 5 à 90 % en poids d'un polyoxyde de phénylène modifié obtenu en faisant réagir 100 parties en poids d'un polyoxyde de phénylène préparé par polymérisation par couplage oxydant d'au moins un phénol représenté par la formule (I) suivante :

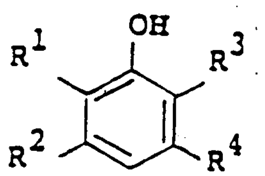

(I)

dans laquelle chacun de $R^1$, $R^2$, $R^3$ et $R^4$, qui peuvent être identiques ou différents entre eux, représente un atome d'hydrogène, un groupe alkyle, alcoxy ou halogénoalkyle ayant 1 à 10 atomes de carbone, un groupe aryle ou un atome d'halogène,

avec 0,05 à 20 parties en poids d'un composé oléfinique substitué dont la molécule contient au moins un groupe fonctionnel choisi parmi un groupe acide carboxylique, un groupe anhydride carboxylique et un groupe imide, en présence d'un générateur de radicaux, (B) 5 à 90 % en poids d'un polyamide, (C) 1 à 20 % en poids d'un élastomère copolymère séquencé du type A-B-A' (où A et A' représentent chacun une séquence d'hydrocarbure vinylique aromatique et B représente une séquence de diène conjugué polymérisé ou une séquence d'hydrocarbure formée en hydrogénant une partie ou la totalité de ladite séquence de diène conjugué), et (D) 1 à 20 % en poids d'une polyoléfine modifiée dont la molécule contient au moins un groupe fonctionnel choisi parmi un groupe acide carboxylique, un groupe sel métallique d'acide carboxylique, un groupe ester d'acide carboxylique, un groupe anhydride carboxylique et un groupe imide.